# EUROPÄISCHE PATENTANMELDUNG

(11) **EP 4 684 704 A1**
(43) Veröffentlichungstag der Anmeldung: **28.01.2026**
(21) Anmeldenummer: 24190674.2
(22) Anmeldetag: 24.07.2024
(51) Int. Cl.: A47J 36/32, A47J 43/07, A47J 27/00

(54) **ZUBEHÖRTEIL UND GRUNDGERÄT FÜR EIN KÜCHENGERÄT, VERFAHREN UND SIGNALVERARBEITUNGSEINHEIT**

(71) Anmelder: Vorwerk & Co. Interholding GmbH, 42275 Wuppertal (DE)
(72) Erfinder: Wahle, Volker, 46499 Hamminkeln (DE); Bambeck, Daniel, 45149 Essen (DE)
(74) Vertreter: Cohausz & Florack

(57) **Zusammenfassung**

Ein Zubehörteil (100, 502, 602, 802) für ein Küchengerät (500), mit einem Gehäuse (102) und mit mindestens einem elektrisch betriebenen Element (104, 106, 624, 822) wird offenbart, das dadurch gekennzeichnet ist, dass ein Kontaktmodul (120, 628, 826) vorgesehen ist, wobei das Kontaktmodul (120, 628, 826) für einen elektrischen Kontakt (514) mit einem Kontaktmodul (316) eines Grundgeräts (300, 504, 604, 804) des Küchengeräts (500) und zum Empfang eines elektrischen Signals (700, 900) über den elektrischen Kontakt (514) ausgebildet ist, und dass eine Signalverarbeitungseinheit (112, 625, 823) vorgesehen ist, wobei die Signalverarbeitungseinheit (112, 625, 823) dazu ausgebildet ist, auf der Grundlage des empfangenen Signals (700, 900) eine erste Signalkomponente (702, 902) zur Energieversorgung des mindestens einen elektrisch betriebenen Elements (104, 106, 624, 822) auszugeben, und auf der Grundlage des empfangenen Signals (700, 900) eine zweite Signalkomponente (704, 708, 904, 908) mit Daten auszugeben. Ein hierzu kompatibles Grundgerät (300, 504, 604, 804), ein Küchengerät (500), ein Verfahren und eine Signalverarbeitungseinheit (112, 306, 605, 625, 807, 823) sind ebenfalls beschrieben.

## Beschreibung

Die vorliegende Erfindung betrifft ein Zubehörteil für ein Küchengerät, mit einem Gehäuse und mit mindestens einem elektrisch betriebenen Element. Die vorliegende Erfindung betrifft weiter ein Grundgerät für ein Küchengerät mit einem Gehäuse und mit einem Energieversorgungselement, ein Küchengerät, ein Verfahren sowie eine Signalverarbeitungseinheit.

Unterschiedliche Küchengeräte sind bereits bekannt, insbesondere zum Verarbeiten von rohen oder halbfertigen Lebensmittelprodukten. Diese Küchengeräte weisen in der Regel ein Grundgerät auf, mit dem separate Funktionsteile zusammenwirken, um je nach erzieltem Gericht, Getränk oder Ähnliches ein Lebensmittel zu verarbeiten. Funktionsteile werden in der Regel durch Küchengeräteanbieter als Zubehörteile verkauft, zum Beispiel als Kochgefäß, Gargefäß, Deckel, Schneide- oder Rühraufsatz. So kann jedes für ein Zusammenwirken mit dem Grundgerät ausgebildete Teil als Zubehörteil vorgesehen sein. Im Allgemeinen weisen jeweils das Zubehörteil und das Grundgerät jeweils miteinander kompatible Schnittstellen auf, die ein Zusammenwirken beider Bauteile ermöglichen. Insbesondere kann durch miteinander in Zusammenwirkung gebrachten Schnittstellen ein Antrieb eines beweglichen Bauteils des Zubehörteils durch einen in dem Grundgerät angeordneten Elektromotor erfolgen.

Moderne Küchengeräte und deren Bestandteile werden zunehmend mit elektrischen und / oder elektronischen Bauteilen ausgestattet, um eine verbesserte Unterstützung des Nutzers bei unterschiedlichen Lebensmittelzubereitungsvorgängen anzubieten. Derartige elektrische oder elektronische Bauteile sollen dann mit Strom versorgt werden. Daneben sind die vorgesehenen elektrischen oder elektronischen Bauteile, beispielsweise Sensoren, dazu eingerichtet, Daten auszugeben. Gleichzeitig soll die Modularität, die ein Grundgerät zusammen mit einer Auswahl an einsetzbaren Zubehörteilen bietet, beibehalten werden.

Vor diesem Hintergrund liegt daher der vorliegenden Erfindung die Aufgabe zu Grunde, Küchengeräte und Zubehörteile bzw. Grundgeräte aus dem Stand der Technik zu verbessern, insbesondere eine verbesserte Verbindung zwischen Grundgerät und Zubehörteil bereitzustellen, die einerseits eine Stromversorgung und andererseits eine Datenübertragung ermöglicht.

Die zuvor genannte Aufgabe wird mit einem Zubehörteil für ein Küchengerät, mit einem Gehäuse und mit mindestens einem elektrisch betriebenen Element dadurch gelöst, dass ein Kontaktmodul vorgesehen ist, wobei das Kontaktmodul für einen elektrischen Kontakt mit einem Kontaktmodul eines Grundgeräts des Küchengeräts und zum Empfang eines elektrischen Signals über den elektrischen Kontakt ausgebildet ist, und dass eine Signalverarbeitungseinheit vorgesehen ist, wobei die Signalverarbeitungseinheit dazu ausgebildet ist, auf der Grundlage des empfangenen Signals eine erste Signalkomponente zur Energieversorgung des mindestens einen elektrisch betriebenen Elements auszugeben, und auf der Grundlage des empfangenen Signals eine zweite Signalkomponente mit Daten auszugeben.

Die zuvor genannte Aufgabe wird weiterhin mit einem Grundgerät für ein Küchengerät mit einem Gehäuse und mit einem Energieversorgungselement dadurch gelöst, dass eine Signalverarbeitungseinheit vorgesehen ist, dass die Signalverarbeitungseinheit dazu ausgebildet ist, ein elektrisches Signal mit einer ersten Signalkomponente und mit einer zweiten Signalkomponente auszugeben, wobei die erste Signalkomponente zur Energieversorgung mindestens eines elektrisch betriebenen Elements eines Zubehörteils ausgebildet ist, und wobei die zweite Signalkomponente Daten aufweist, dass ein Kontaktmodul vorgesehen ist, dass das Kontaktmodul für einen elektrischen Kontakt mit einem Kontaktmodul des Zubehörteils für ein Küchengerät, insbesondere mit einem Kontaktmodul eines Zubehörteils gemäß der vorliegenden Offenbarung, ausgebildet ist, dass das Kontaktmodul zur Übertragung des elektrischen Signals über den elektrischen Kontakt ausgebildet ist.

Die zuvor genannte Aufgabe wird weiterhin gelöst durch ein Küchengerät mit einem Zubehörteil gemäß der vorliegenden Offenbarung und mit einen Grundgerät gemäß der vorliegenden Offenbarung.

Die zuvor genannte Aufgabe wird weiterhin gelöst durch ein Verfahren zum Betreiben eines Küchengeräts mit einem Grundgerät und mit einem Zubehörteil, insbesondere eines Küchengeräts gemäß der vorliegenden Offenbarung, bei dem eine elektrische Verbindung zwischen dem Grundgerät und dem Zubehörteil gebildet wird, indem ein Kontaktmodul des Grundgeräts und ein Kontaktmodul des Zubehörteils in Kontakt gebracht werden, bei dem ein erstes elektrisches Signal von dem Grundgerät auf das Zubehörteil über die elektrische Verbindung übertragen wird, bei dem mindestens ein elektrisch betriebenes Element des Zubehörteils auf der Grundlage des übertragenen ersten Signals mit Energie versorgt wird, und bei dem durch eine Steuereinrichtung des Zubehörteils und auf der Grundlage des übertragenen ersten Signals Daten ermittelt werden.

Die zuvor genannte Aufgabe wird weiterhin gelöst durch eine Signalverarbeitungseinheit für ein Küchengerät, insbesondere für ein Zubehörteil gemäß der vorliegenden Offenbarung oder für ein gemäß der vorliegenden Offenbarung, mit einem Kontaktmodul und mit einer integrierten Schaltung zur Verarbeitung von Mixed-Signalen oder mit einer Operationsverstärkerschaltung, wobei das Kontaktmodul ein erstes Kontaktelement und ein zweites Kontaktelement aufweist, wobei das Kontaktmodul mit der integrierten Schaltung oder mit der Operationsverstärkerschaltung verbunden ist, und wobei die Signalverarbeitungseinheit dazu ausgebildet ist, einerseits ein Signal derart zu verarbeiten und an das Kontaktmodul auszugeben, dass das Signal eine erste Signalkomponente zur Energieversorgung eines elektrisch betriebenen Elements und eine zweite Signalkomponente mit Daten aufweist, und andererseits auf der Grundlage eines durch das Kontaktmodul empfangenen Signals eine Signalkomponente mit Daten auszugeben.

Insgesamt werden Mittel und ein Verfahren vorgeschlagen, mit denen sowohl eine Stromversorgung als auch eine Kommunikation, möglicherweise uni- oder bidirektional zwischen dem Grundgerät und dazugehörigen Zubehörteilen, beispielsweise in Form eines Topfes mit integrierter Heizung möglich ist. Dabei können die Stromversorgung von elektrischen Komponenten des Zubehörteils und die Kommunikation bzw. ein Datenaustausch auf der Grundlage einer Übertragung einer einzelnen Signalfolge erfolgen, so dass eine reduzierte Anzahl an gegenständlichen Verbindungselementen benötigt wird. Gleichzeitig bleibt die Verbindung gegenständlich, also beruht auf keinem berührungslosen Kommunikationsstandard, so dass die Mittel zur Verwirklichung der Signalübertragung eine geringe Komplexität aufweisen. Dadurch können das Zubehörteil und das Grundgerät vereinfacht ausgebildet werden.

Das Kontaktmodul für die Signalübertragung kann beispielsweise maximal zwei Kontaktelemente, beispielsweise in Form von Kontaktpins oder Stecker bzw. Dosen aufweisen, um das Signal zu empfangen oder zu senden. So wird die Anzahl an Kontaktelementen, die üblicherweise für eine Stromversorgung und für eine Datenübertragung parallel eingesetzt werden, verringert. Daneben können weitere Kontaktelemente bzw. -gegenelemente vorgesehen sein, beispielsweise zur Energieversorgung eines Heizmoduls des Zubehörteils oder zur Erdung.

Durch die vorliegend vorgeschlagene Lösung wird die Anzahl an Kontaktelementen bzw. Kontaktpins verringert, beispielsweise auf lediglich zwei Kontaktpins, woraus sich sowohl kosten- als auch anwendungstechnisch Vorteile ergeben. So werden eine geringe Verschmutzung des Kontaktmoduls und somit auch ein geringer Bedarf an Reinigung, und eine Vereinfachung des Kontaktierens, beispielsweise beim Einsetzen eines Zubehörteils in Form eines Kochtopfes am Grundgerät, erreicht. Demensprechend ist die Nutzerfreundlichkeit der vorgeschlagenen Mittel gesteigert.

Daneben werden weniger Bauteile und Material für die Kontaktmodule des Zubehörteils und des Grundgeräts benötigt. Gleichzeitig ist eine einfachere Verdrahtung bzw. Leitungsführung erforderlich. So können die Herstellungskosten geringgehalten werden.

Durch die Signalübertragung via einen gegenständlichen Kontakt zwischen den Kontaktmodulen des Zubehörteils und des Grundgeräts kann eine relative robuste Kommunikation gewährleistet werden, bzw. die Signalübertragung kann zuverlässig durchgeführt werden.

Ein Grundgerät im Sinne der vorliegenden Erfindung ist vorzugsweise als Basis für den Einsatz von Zubehörteilen ausgestaltet, indem es eine Schnittstelle für ein Zusammenwirken mit mindestens einem Zubehörteil aufweist. Das Grundgerät weist ein Gehäuse auf, in dem ein Elektromotor zum Antrieb von Zubehörteilen angeordnet sein kann. Der Elektromotor wirkt mit einem am Grundgerät eingesetzten Zubehörteil über die Schnittstelle des Grundgeräts zusammen. Dabei kann die Schnittstelle zur Übertragung einer mechanischen Kraft, beispielsweise mittels eines Kupplungselementes ausgebildet sein.

Das Grundgerät weist ein Energieversorgungselement auf. Das Energieversorgungselement kann beispielsweise als elektrischer Anschluss für einen Anschluss mit einem Versorgungsnetzwerk eines Haushaltes ausgebildet sein. Ein Beispiel für einen derartigen Anschluss ist ein Stecker. Alternativ oder zusätzlich kann das Energieversorgungselement eine Batterie, einen Akkumulator, einen Generator oder weitere stromproduzierende oder Stromspeicher aufweisen.

Das Zubehörteil kann mittelbar oder unmittelbar am Grundgerät einsetzbar sein, wobei für ein unmittelbares Einsetzen das Zubehörteil eine mit der Schnittstelle des Grundgeräts kompatible Schnittstelle aufweist, und wobei für ein mittelbares Einsetzen das Zubehörteil an einem weiteren Zubehörteil angesetzt ist, das wiederum unmittelbar am Grundgerät eingesetzt ist. Der Begriff "Einsetzen" umfasst, unter anderem, die Handlungen aus der Liste: Verbinden, Koppeln, Montieren, Aufsetzen, Anbringen, Aufbringen und Ähnliches. Insbesondere ist ein Zubehörteil zur Erweiterung der Funktion des Grundgeräts ausgebildet, zum Beispiel als Schneide-, Rühr-, Koch-, Wiege-, Gar-, Dampf- oder Abdeckungseinheit. Die Funktion, für die das Zubehörteil vorgesehen ist, bezeichnet vorzugsweise den Zubehörteiltyp.

Das Zubehörteil weist mindestens ein elektrisch betriebenes Element auf. Dabei können ein oder mehrere Elemente vorgesehen sein, ggf. unterschiedlicher Art. So kann das Zubehörteil beispielsweise einen Controller, Sensoren, Aktoren, sowie Zusatzelemente zur Funktionserweiterung aufweisen, die jeweils als elektrisch betriebenes Element anzusehen sind. Beispiele für ein elektrisch betriebenes Element sind: Sensor, Heizung, Prozessor, Datenspeicher oder Weiteres, wobei das Vorsehen mehrerer solcher Elemente einzeln oder in Kombination möglich ist. Vorzugsweise werden Komponente des Zubehörteils, die für eine Heizung von Lebensmitteln vorgesehen sind, separat mit Energie versorgt, beispielsweise über dedizierte Kontaktelemente.

Das Zubehörteil und das Grundgerät weisen jeweils ein Kontaktmodul auf. Vorzugsweise sind das Kontaktmodul des Zubehörteils und das Kontaktmodul des Grundgeräts miteinander kompatibel ausgebildet, beispielsweise als Stecker und als Steckdose. Alternativ oder zusätzlich sind die Kontaktmodule für einen einfachen Kontakt ausgebildet, beispielsweise mit jeweils einer Metalloberfläche, wobei die jeweiligen Metalloberflächen beim Ein- oder Ansetzen des Zubehörteils am Grundgerät in Berührung kommen und somit einen elektrischen Kontakt bilden.

Das Kontaktmodul des Zubehörteils ist für einen Empfang eines elektrischen Signals über den elektrischen Kontakt ausgebildet. Vorzugsweise ist das Kontaktmodul des Grundgeräts ebenfalls für einen Empfang eines elektrischen Signals über den elektrischen Kontakt ausgebildet. Hierzu kann das jeweilige Kontaktmodul zumindest abschnittsweise, vorzugsweise im Bereich eines Kontaktelements, eine elektrisch leitende Materialzusammensetzung aufweisen, beispielsweise mit einem Metall wie Kupfer. Vorzugsweise sind das Kontaktmodul des Grundgeräts für einen lösbaren elektrischen Kontakt mit dem Kontaktmodul eines Zubehörteils und das Kontaktmodul des Zubehörteils ist für einen lösbaren elektrischen Kontakt mit dem Kontaktmodul und Grundgerät ausgebildet. So kann beispielsweise der Kontakt durch einfaches Hineinstellen und / oder Stecken erfolgen.

Das Signal weist eine erste Signalkomponente und eine zweite Signalkomponente auf. Vorzugsweise ist die erste Signalkomponente durch Anlegen einer Grundspannung bzw. Gleichspannung zwischen dem Grundgerät und dem Zubehörteil bzw. zwischen deren jeweiligen Kontaktmodulen. So kann die erste Signalkomponente durch ein Inkontaktbringen der Kontaktmodule und mittels des Energieversorgungselements angelegt werden. Die erste Signalkomponente kann einer Gleichspannung im Bereich von 0 bis 30 V, insbesondere im Bereich von 5 bis 25 V, bevorzugt im Bereich von 10 bis 20 V, weiter bevorzugt im Bereich von 10 bis 15 V, besonders bevorzugt im Wesentlichen gleich 12 V.

Die zweite Signalkomponente kann durch die Signalverarbeitungseinheit des Grundgeräts und / oder durch die Signalverarbeitungseinheit des Zubehörteils hervorgebracht werden, beispielsweise indem die angelegte Grundspannung mit einer Modulation überlagert wird. Die jeweiligen Signalverarbeitungseinheiten können dazu ausgebildet sein, eine Modulation mit einer Amplitude der Größenordnung einiger Volts zu erzeugen, beispielsweise ca. 3,3 V.

Es kann vorgesehen sein, dass die Grundspannung sowohl mit einer Modulation, die durch die Signalverarbeitungseinheit des Grundgeräts, als auch mit einer Modulation, die durch die Signalverarbeitungseinheit des Zubehörteils erzeugt wurde, überlagert wird. Ein solches Signal, das also die Grundspannung und beide Modulationen aufweist, kann für eine bidirektionale Datenübertragung, das heißt sowohl vom Grundgerät in Richtung Zubehörteil als auch vom Zubehörteil in Richtung Grundgerät dienen. Bei einer Übertragungsrichtung vom Grundgerät zum Zubehörteil kann die erste Signalkomponente zur Energieversorgung des Zubehörteils bzw. seiner elektrisch betriebenen Elemente und die zweite Signalkomponente zur Übertragung von beispielsweise Steuerbefehlen für ein Heizelement oder einen Sensor dienen. Bei einer Übertragungsrichtung vom Zubehörteil zum Grundgerät kann die zweite Signalkomponente zur Übertragung von beispielsweise durch Sensoren des Zubehörteils erfassten Daten oder von Informationen aus einem Datenspeicher des Zubehörteils, beispielsweise einer Zubehörteil ID, an das Grundgerät dienen.

Vorzugsweise sind die Signalverarbeitungseinheit des Zubehörteils und die Signalverarbeitungseinheit des Grundgeräts gleich oder im Wesentlichen spiegelsymmetrisch aufgebaut. Somit kann ein durch eine der Signalverarbeitungseinheiten moduliertes Signal durch die weitere Signalverarbeitungseinheit demoduliert werden. Zusätzlich kann die Signalverarbeitungseinheit des Zubehörteils einen sogenannten "Low Drop Out" (LDO) -Element aufweisen, mit dem die erste Signalkomponente aus dem Signal extrahiert werden kann. Die erste Signalkomponente entspricht vorzugsweise einer ausreichenden Grundspannung zur Energieversorgung von dem mindestens einen elektrisch betriebenen Element des Zubehörteils. Insbesondere kann die erste Signalkomponente eine Trägerfrequenz aufweisen, dessen Betrag in Abhängigkeit von einer erzielten Datenrate für das Signal entspricht. Mit einer hohen Trägerfrequenz kann eine verbesserte Stabilität bzw. eine geringe Störanfälligkeit des Signals erreicht werden.

Daneben entspricht die zweite Signalkomponente vorzugsweise einem modulierten Anteil des Signals. Dabei kann die Modulation beispielsweise eine impulsartige Form oder eine rechteckige Form in der Darstellung der Signalamplitude über die Zeit aufwiesen. Eine derartige zweite Signalkomponente lässt sich mit einem Tiefpassfilter, mit einem Hochpassfilter oder mit einer Kombination hiervon gut extrahieren bzw. von einem Trägersignal, beispielswiese der ersten Signalkomponente trennen. Weiterhin kann die Modulation einer sogenannten On-Off-Key-Modulation entsprechen. Dadurch kann eine hohe Datenrate erreicht werden.

Die zweite Signalkomponente weist Daten aus. Hierzu können die Modulationen des Signals Informationen entsprechen, die ggf. codiert oder in Bitform ausgedrückt sind. So kann beispielsweise die Signalverarbeitungseinheit dazu eingerichtet sein, ein Signal gemäß einem UART-Protokoll (Universal Asynchronous Receiver Transmitter) zu verarbeiten, zu empfangen oder zu senden. Beispiele für die Daten, die durch die zweite Signalkomponente getragen werden können, sind: durch Sensoren erfasste Informationen, beispielsweise durch Hall-Sensoren, Temperatursensoren, Zubehörteilerkennungseinheit; zubehörteilspezifische Information wie zum Beispiel eine Identifikationsnummer oder eine eindeutige Identifikationsinformation; Spannungsvariante und Kalibrierwerte, Zustandswerte, Statusinformationen oder auch Firmwareupdates, wobei diese Liste nicht abschließend ist. Dementsprechend kann das Küchengeräts in Abhängigkeit von den aus der zweiten Signalkomponente ermittelten Daten gesteuert werden.

Bei einem Signal, das eine erste Signalkomponente mit einem bestimmten Grundsignal bzw. einer Grundspannung, beispielsweise ca. 12 V Gleichspannung, und eine zweite Signalkomponente mit einer On-Off-Key- Modulation aufweist, kann eine Betriebsspannung robust übertragen werden, insbesondere unter Berücksichtigung des Widerstandes, der beim physischen Kontaktieren der Kontaktmodule vorliegt. Darüber hinaus kann mit einem derartigen Signal eine hohe Datenrate erreicht werden, beispielsweise über 30 000 baud, insbesondere über 35 000 baud, bevorzugt über 38 000 baud. Ferner kann mit einem derartigen Signal eine handhabbare Störaussendung bzw. eine relativ störfeste Kommunikation erreicht werden, wobei lediglich nur einzelne Signalfehler auftreten.

Die Steuereinrichtung weist vorzugsweise einen Prozessor mit einem Speichermedium auf. Insbesondere kann ein Computerprogramm mit Befehlen auf dem Speichermedium gespeichert sein, deren Ausführung durch den Prozessor die Durchführung eines Betriebsverfahrens durch das Küchengerät bewirkt. Auf dem Speichermedium kann eine Datenbank gespeichert sein. Beispiele für Daten, die in der Datenbank hinterlegt sind, sind: Zubehörteilinformationen, Zubereitungsvorschriften, Lebensmittelinformationen, Nutzerinformationen, Sensordaten oder weiteres.

Im Folgenden werden verschiedene Ausführungsformen des Zubehörteils, des Grundgeräts, des Küchengeräts, des Verfahrens und der Signalverarbeitungseinheit beschrieben, wobei die einzelnen Ausführungsformen jeweils unabhängig voneinander für das Zubehörteil, das Grundgerät, das Küchengerät, das Verfahren und die Signalverarbeitungseinheit gelten. Darüber hinaus können die einzelnen Ausführungsformen beliebig miteinander kombiniert werden.

Bei einer Ausführungsform des Zubehörteils ist vorgesehen, dass eine Steuereinrichtung vorgesehen ist, und dass die Steuereinrichtung dazu eingerichtet ist, die Daten aus der durch die Signalverarbeitungseinheit ausgegebenen zweiten Signalkomponente zu ermitteln.

Dadurch können je nach dem Bauteil des Küchengeräts, also das Grundgerät oder das Zubehörteil, das eine derartige Steuereinrichtung aufweist, Daten aus dem empfangenen Signal ermittelt und für eine Steuerung berücksichtigt werden. Beispielsweise kann eine durch das Zubehörteil via die zweite Signalkomponente übertragene Zubehörteilidentifikationsinformation durch die Steuereinrichtung zur Erkennung des Zubehörteils verwendet und somit auch entsprechende Funktionen freigeschaltet werden. Ebenso können Sensorinformationen vom Zubehörteil an das Grundgerät übertragen werden und durch die Steuereinrichtung des Grundgeräts zum Beispiel zum Steuern des Elektromotors oder zum Anpassen von Heizungsparametern verwendet werden. Ferner können Steuerbefehle, die durch das Grundgerät an das Zubehörteil übertragen werden, durch die Steuereinrichtung des Zubehörteils durchgeführt werden.

Das mindestens ein elektrisch betriebenes Element des Zubehörteils kann die Steuereinrichtung umfassen.

Bei einer Ausführungsform des Zubehörteils ist vorgesehen, dass die Daten Steuerinformationen für das mindestens ein elektrisch betriebenes Element entsprechen.

Auf diese Weise können Steuerinformationen, die durch das Grundgerät bereitgestellt werden, mittels der zweiten Signalkomponente an das Zubehörteil übertragen werden und dort, beispielsweise durch eine Steuereinrichtung des Zubehörteils, verarbeitet und ggf. zur Durchführung einer entsprechenden Steuerung berücksichtigt werden. Beispiele für Steuerinformationen sind Kalibrierwerte, Firmwareupdates, Befehle über eine Aktivierung eines Aktors, wobei diese Liste nicht abschließend ist.

In dem Fall einer Übertragung des Signals von dem Zubehörteil zum Grundgerät ermöglicht die vorliegende Ausführungsform eine Bereitstellung von Steuerinformationen durch das Zubehörteil an das Grundgerät. So können beispielsweise Steuerinformationen aus einer am Zubehörteil gespeicherten Zubereitungsvorschrift dem Grundgerät zur Verfügung gestellt werden. Ferner können Zustände des Zubehörteils, beispielsweise eine Information über ein erkanntes Zusatzzubehörteil wie ein Deckel oder eine Isolierung, Messwerte von Temperatursensoren, Messwerte von HAL-Sensoren, Informationen über Fehlerzustände, Firmwareversionsnummern, und ähnliches übertragen werden, wobei diese Liste nicht abschließend ist.

Bei einer Ausführungsform des Zubehörteils ist vorgesehen, dass die Signalverarbeitungseinheit dazu ausgebildet ist, auf der Grundlage eines durch Kontakt mit dem Grundgerät übermittelten Grundsignals, insbesondere auf der Grundlage einer durch Kontakt mit dem Grundgerät angelegten Grundspannung, ein moduliertes elektrisches Signal auszugeben, wobei das modulierte elektrisches Signal eine Signalkomponente mit Daten aufweist, und dass das Kontaktmodul dazu ausgebildet ist, das durch die Signalverarbeitungseinheit ausgegebene modulierte elektrische Signal über den elektrischen Kontakt an das Grundgerät zu übermitteln.

So ist die Signalverarbeitungseinheit des Zubehörteils dazu eingerichtet, zusätzlich zur Funktion, ein Signal zu empfangen, auch ein Signal zu senden. Dadurch kann eine bidirektionale Datenübertragung erfolgen.

Hierzu kann die Signalverarbeitungseinheit einerseits einen Sendepfad und andererseits einen Empfangspfad aufweisen. Insbesondere kann der Empfangspfad und / oder der Sendepfad für eine Datenübertragung gemäß einem UART-Protokoll eingerichtet sein.

Bei einer Ausführungsform des Zubehörteils ist vorgesehen, dass mindestens ein Sensor zur Ausgabe von Messdaten vorgesehen ist, und dass die Daten der Signalkomponente des durch die Signalverarbeitungseinheit ausgegebenen modulierten elektrischen Signals den Messdaten entsprechen.

Das mindestens ein elektrisch betriebenes Element kann den mindestens einen Sensor umfassen. Insbesondere kann die Signalverarbeitungseinheit des Zubehörteils dazu ausgebildet sein, ein elektrisches Signal derart zu modulieren und auszugeben, dass das ausgegebene Signal eine Signalkomponente mit Daten aufweist, wobei das Kontaktmodul dazu ausgebildet ist, das durch die Signalverarbeitungseinheit modulierte elektrische Signal über den elektrischen Kontakt zu senden, und das Zubehörteil kann eine Steuereinrichtung und den mindestens einen Sensor, beispielsweise zwei Sensoren aufweisen. Dadurch können am Zubehörteil Messdaten durch die Sensoren erfasst werden, durch die Steuereinrichtung verarbeitet und durch die Signalverarbeitungseinheit per Signalübertragung an das Grundgerät übertragen werden. Hierzu kann die Steuereinrichtung mit der Signalverarbeitungseinheit für eine Kommunikation bzw. Datenübertragung gemäß einem UART-Protokoll verbunden sein.

Der mindestens ein Sensor kann als analoger Sensor oder als digitaler Sensor ausgebildet sein, und mit einer Steuereinrichtung des Zubehörteils für eine Übertragung von erfassten Messdaten oder von Daten wie Kalibrierwerte oder Firmware verbunden sein. Mehrere Sensoren können mit der Steuereinrichtung des Zubehörteils verbunden sein, die entweder digital per I2C verbindbar sind, wie zum Beispiel ein Hall-Sensor zur Zubehörteilerkennung oder zur Erkennung eines Isolierungszustandes, oder analoge Sensoren sind, beispielsweise Temperatursensoren oder ein negativer Temperaturkoeffizient-Thermistor (sogenannter "NTC").

Bei einer Ausführungsform des Zubehörteils ist vorgesehen, dass das Kontaktmodul ein erstes Kontaktelement und ein zweites Kontaktelement aufweist.

Bei einer Ausführungsform des Grundgeräts ist vorgesehen, dass das Kontaktmodul ein erstes Kontaktelement und ein zweites Kontaktelement aufweist.

Dadurch kann die Stromversorgung des elektrisch betriebenen Elements des Zubehörteils und auch eine Datenübertragung lediglich mit zwei Kontaktelementen, beispielsweise als Kontaktpins ausgebildet, erfolgen. Im Vergleich zu einer Alternativlösung mit mehr als zwei Kontaktelementen bietet eine zwei Pins Lösung den Vorteil einer Material- bzw. Kosteneinsparung bei der Herstellung des Küchengeräts bzw. des Zubehörteils und des Grundgeräts. Darüber hinaus wird dadurch das Einsetzen des Zubehörteils am Grundgerät vereinfacht und somit die Nutzerfreundlichkeit gesteigert.

Vorzugsweise entspricht das erste Kontaktelement einem positiven Pol und das zweite Kontaktelement entspricht einem negativen Pol. Zusätzlich kann das Kontaktmodul mindestens ein Element aus der folgenden Liste aufweisen, wobei diese Liste nicht abschließend ist: ein Erdungselement, ein Schutzleiter, ein Heizungsversorgungselement, ein Kupplungselement zur mechanischen Kupplung eines mechanischen Funktionselements des Zubehörteils mit dem Elektromotor des Grundgeräts, ein Verriegelungselement zur mechanischen Verriegelung des Zubehörteils mit dem Grundgerät.

Weiterhin können das erste Kontaktelement und das zweite Kontaktelement des Kontaktmoduls des Zubehörteils für einen jeweiligen elektrischen Kontakt mit einem ersten Kontaktelement und mit einem zweiten Kontaktelement des Kontaktmoduls des Grundgeräts ausgebildet sein.

Bei einer besonderen Ausführungsform des Zubehörteils sind das erste Kontaktelement und das zweite Kontaktelement, ggf. auch das Erdungselement des Kontaktmoduls als männliches Steckerelement ausgebildet. Bei einer korrespondierenden Ausführungsform des Grundgeräts sind das erste Kontaktelement und das zweite Kontaktelement, ggf. auch das Erdungselement des Kontaktmoduls. als weibliches Steckerelement ausgebildet. Dadurch sind das Kontaktmodul des Zubehörteils und das Kontaktmodul des Grundgeräts miteinander kompatibel.

Bei einer weiteren Ausführungsform des Zubehörteils ist vorgesehen, dass das Kontaktmodul, zusätzlich zum ersten Kontaktelement und zum zweiten Kontaktelement, auch ein Erdungselement aufweist. Das Erdungselement kann dazu ausgebildet sein, einzelne Komponente des Zubehörteils oder das gesamte Zubehörteil über einen Kontakt mit einem entsprechenden Erdungsgegenelement des Grundgeräts zu erden.

Zusätzlich kann das Kontaktmodul des Zubehörteils auch mindestens ein, vorzugsweise zwei, Heizungsversorgungskontaktelement aufweisen. Dadurch kann ein Heizelement des Zubehörteils separat mit Energie versorgt werden. Regelmäßig ist der Energiebedarf von Heizelementen höher als der Energiebedarf von elektronischen Komponenten, so dass eine separate Energieversorgung durchaus vorteilhaft sein kann.

Bei einer weiteren Ausführungsform des Grundgeräts ist vorgesehen, dass das Kontaktmodul, zusätzlich zum ersten Kontaktelement und zum zweiten Kontaktelement, auch ein Erdungsgegenelement aufweist. Das Erdungsgegenelement kann dazu ausgebildet sein, einzelne Komponente des Zubehörteils oder das gesamte Zubehörteil über einen Kontakt mit einem entsprechenden Erdungselement des Grundgeräts zu erden.

Zusätzlich kann das Kontaktmodul des Grundgeräts auch mindestens ein, vorzugsweise zwei, Heizungsversorgungskontaktgegenelement aufweisen. Dadurch kann ein Heizelement des Zubehörteils separat mit Energie versorgt werden. Regelmäßig ist der Energiebedarf von Heizelementen höher als der Energiebedarf von elektronischen Komponenten, so dass eine separate Energieversorgung durchaus vorteilhaft sein kann.

Bei einer Ausführungsform des Zubehörteils ist vorgesehen, dass ein eine Wandung aufweisender Aufnahmebereich zur Aufnahme von Lebensmitteln vorgesehen ist, dass an der Wandung ein Bauteil angeordnet ist, und dass das mindestens ein elektrisch betriebenes Element in dem Bauteil integriert ist.

Ein derartiges Zubehörteil ermöglicht eine Aufnahme von Lebensmittel für eine Zubereitung, wobei ein Kontakt zwischen den aufgenommenen Lebensmitteln und dem elektrisch betriebenen Element vermieden wird. So werden hygienische Bedingungen bewahrt und die Lebensdauer des elektrisch betriebenen Elements verlängert. Außerdem werden durch das Integrieren des elektrisch betriebenen Elements in dem Bauteil Abnutzungen und Gefahren für den Nutzer vermieden.

Beispiele für das Bauteil sind: Griffelement, Deckel, Isolierungselement, abnehmbares Zusatzbauteil oder eine Kombination hiervon, wobei diese Liste nicht abschließend ist.

Bei einer Ausführungsform des Grundgeräts ist vorgesehen, dass eine Steuereinrichtung vorgesehen ist, wobei die Steuereinrichtung dazu ausgebildet ist, Steuerinformationen auszugeben, und dass die Signalverarbeitungseinheit dazu ausgebildet ist, das durch das Kontaktmodul zu übertragende elektrische Signal derart zu modulieren und auszugeben, dass die Daten der zweiten Signalkomponente den Steuerinformationen entsprechen.

Auf diese Weise können Steuerinformationen durch das Grundgerät bereitgestellt und durch eine Steuereinrichtung eines empfangenden Zubehörteils für eine Steuerung, beispielsweise eines Sensors, berücksichtigt werden.

Bei einer Ausführungsform des Grundgeräts ist vorgesehen, dass das Kontaktmodul zum Empfang eines elektrischen modulierten Signals über den elektrischen Kontakt ausgebildet ist, und dass die Signalverarbeitungseinheit dazu ausgebildet ist, auf der Grundlage des empfangenen modulierten Signals eine Signalkomponente mit digitalen Daten auszugeben.

Dadurch kann eine Datenübertragung von einem Zubehörteil an das Grundgerät erfolgen, so dass insgesamt eine bidirektionale Datenübertragung ermöglicht ist.

Hierzu kann die Signalverarbeitungseinheit dazu eingerichtet sein, das empfangene, modulierte Signal zu demodulieren und anschließend an eine Steuereinrichtung des Grundgeräts weiterzuleiten.

Bei einer Ausführungsform des Verfahrens ist vorgesehen, dass ein zweites elektrisches Signal von dem Zubehörteil auf das Grundgerät über die elektrische Verbindung übertragen wird, und dass durch eine Steuereinrichtung des Grundgeräts und auf der Grundlage des zweiten Signals Daten ermittelt werden.

Dadurch wird eine zuverlässige, robuste bidirektionale Datenübertragung zwischen dem Zubehörteil und dem Grundgerät realisiert: mit dem ersten Signal werden Daten vom Grundgerät an das Zubehörteil übertragen und mit dem zweiten Signal werden Daten vom Zubehörteil an das Grundgerät übertragen.

Bei einem konkreten Ausführungsbeispiel des Verfahrens kann vorgesehen sein, dass das Kontaktmodul des Grundgeräts mit dem Kontaktmodul des Zubehörteils in Kontakt derart gebracht wird, dass zwischen dem Kontaktmodul des Grundgeräts und dem Kontaktmodul des Zubehörteils eine Grundspannung, beispielweise ca. 12 V Gleichspannung, angelegt ist, und das Zubehörteil bzw. einzelne Komponente des Zubehörteils geerdet sind.

Zusätzlich kann die Signalverarbeitungseinheit des Grundgeräts die so angelegte Grundspannung mit einer ersten Modulation überlagern, beispielsweise mit einer Amplitude von ca. 3,3 V, wobei die Modulation eine On-Off Key Modulation ist, die digitalen Daten entspricht, die der Signalverarbeitungseinheit durch die Steuereinrichtung des Grundgeräts bereitgestellt worden sind.

Weiterhin kann die Signalverarbeitungseinheit des Zubehörteils die zwischen dem Grundgerät und dem Zubehörteil angelegte Grundspannung mit einer zweiten Modulation überlagern, beispielsweise mit einer Amplitude von ca. 3,3 V, wobei die Modulation eine On-Off Key Modulation ist, die digitalen Daten entspricht, die der Signalverarbeitungseinheit durch die Steuereinrichtung des Zubehörteils bereitgestellt worden sind
Bei einer besonderen Ausführungsform ist vorgesehen, dass die erste Signalkomponente einen im Wesentlichen konstanten Zeitverlauf aufweist, und dass die zweite Signalkomponente Strompulse aufweist.

So kann eine Stromversorgung des elektrisch betriebenen Elements am Zubehörteil über lediglich zwei Kontaktelemente des Kontaktmoduls erfolgen, und die Datenübertragung kann so in sogenanntem halb-duplex durch Strompulse auf der Versorgungsleitung und damit verbundene Schwankung der Versorgungsspannung dieser beiden Kontaktelemente erfolgen.

Insbesondere kann die zweite Signalkomponente schnellen bzw. abrupten Stromänderungen entsprechen. So kann die zweite Signalkomponente durch einen Hochpass-Filter ermittelt bzw. von der ersten Signalkomponente getrennt werden.

Daneben kann durch den im Wesentlichen konstanten Zeitverlauf der ersten Signalkomponente diese durch einen Tiefpass-Filter ermittelt bzw. von der zweiten Signalkomponente getrennt werden.

Hierzu kann die Signalverarbeitungseinheit einen Hochpass-Filter und einen Tiefpass-Filter aufweisen. Ferner kann die Signalverarbeitungseinheit mit dem Tiefpass-Filter auch langsame Signalschwankungen bzw. Änderungen im Stromverbrauch kompensieren, um Kommunikationsstörungen zu unterbinden.

Bei einer Ausführungsform ist vorgesehen, dass die Signalverarbeitungseinheit eine Operationsverstärkerschaltung aufweist, wobei die Operationsverstärkerschaltung dazu eingerichtet ist, die zweite Signalkomponente aus dem empfangenen Signal mittels einer Vergleichsfunktion zu extrahieren.

Sowohl beim Grundgerät als auch beim Zubehörteil können Schwankungen des Stromflusses des empfangenen Signals mittels einer Operationsverstärkerschaltung detektiert werden, wobei diese Schwankungen der zweiten Signalkomponente entsprechen. Hierzu kann der Operationsverstärker als Komparator geschaltet sein, und somit die Vergleichsfunktion aufweisen. Mit Hilfe eines Tiefpass-Filters wird eine Referenzspannung für den Komparator aus einer Versorgungsleitung zur Verfügung gestellt. Damit wird sichergestellt, dass langsame Schwankungen des Signals bzw. des Stroms (z.B. durch Zustandsänderungen einer Steuereinrichtung in Form eines Mikrocontrollers oder von Sensoren bzw. Aktoren des Zubehörteils) herausgefiltert werden und so Störungen bei der Datenübertragung vermieden werden.

Daneben kann vorgesehen sein, dass ein Eingangssignal für den Komparator mit einem Hochpass-Filter ermittelt wird, um schnelle Schwankungen des Stromverbrauchs zu detektieren. Sendeseitig (TXD) kann der Strom auf der Versorgungsleitung mit einer einfachen Transistorstufe über einen Widerstand sprunghaft erhöht werden. Dies führt auf der Empfangsseite (RXD) sowohl beim Grundgerät als auch beim Zubehörteil zu einem entsprechenden Ausgangssignal des Komparators. Wenn das sendende Element, also das Grundgerät oder das Zubehörteil, auch gleichzeitig das gesendete Signal empfängt, ist auch eine Überprüfung der Sendefunktion gegeben. Vorzugsweise sind sowohl der Tiefpass als auch der Hochpassfilter bei der zutreffenden Bandbreite der zu übertragenden Daten eingestellt.

Ferner können mehrere Sensoren mit der Steuereinrichtung des Zubehörteils verbunden sein, die entweder digital per 12C verbindbar sind, wie zum Beispiel ein Hall-Sensor zur Zubehörteilerkennung oder zur Erkennung eines Isolierungszustandes, oder analoge Sensoren sind, beispielsweise Temperatursensoren oder ein negativer Temperaturkoeffizient-Thermistor (sogenannter "NTC"). Eine Kombination von Sensoren unterschiedlicher Art kann dazu führen, dass der Stromverbrauch für das Zubehörteil in einer bestimmten Bandbreite variabel sein kann. Langsame Änderungen im Stromverbrauch werden durch Tiefpass-Filterung sowohl auf der Seite des Grundgeräts als auch auf der Seite des Zubehörteils kompensiert, um Kommunikationsstörung zu unterbinden. Im Ergebnis erfolgt die Datenüberragung bzw. die Kommunikation durch Übermittlung von schnellen bzw. abrupten Stromänderungen, die mithilfe einer Hochpass-Filterung erfasst werden.

Weitere Merkmale und Vorteile des Zubehörteils, des Grundgeräts, des Küchengeräts, des Verfahrens und der Signalverarbeitungseinheit ergeben sich aus der nachfolgenden Beschreibung von Ausführungsbeispielen, wobei auf die beigefügte Zeichnung Bezug genommen wird.

In der Zeichnung zeigen
- Fig. 1: ein Ausführungsbeispiel für ein Zubehörteil für ein Küchengerät;
- Fig. 2: die Schnittstelle des Zubehörteils mit einem Kontaktmodul aus der Fig. 1 in einer Detailansicht;
- Fig. 3: ein Ausführungsbeispiel für ein Grundgerät für ein Küchengerät;
- Fig. 4: ein Ausführungsbeispiel für ein Küchengerät in einem montierten Zustand;
- Fig. 5: ein erstes Ausführungsbeispiel eines Schaltplans für ein System mit einem Zubehörteil und mit einem Grundgerät in einer schematischen Darstellung;
- Fig. 6: ein Ausführungsbeispiel für integrierte Schaltung zur Verarbeitung von Mixed-Signalen;
- Fig. 7a bis 7e: eine schematische Darstellung eines Ausführungsbeispiels für ein Signal, das im System aus der Fig. 5 übertragen wird;
- Fig. 8: ein zweites Ausführungsbeispiel eines Schaltplans für ein System mit einem Zubehörteil und mit einem Grundgerät in einer schematischen Darstellung; und
- Fig. 9a bis 9d: eine schematische Darstellung eines Ausführungsbeispiels für ein Signal, das im System aus der Fig. 8 übertragen wird.

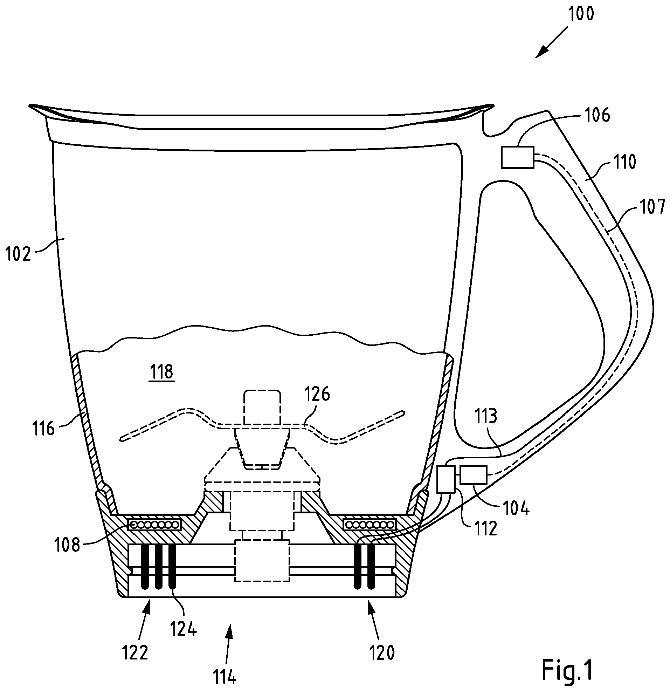

Fig. 1 zeigt ein Ausführungsbeispiel für ein Zubehörteil 100 für ein Küchengerät. Das Zubehörteil 100 ist als Kochgefäß ausgebildet und weist ein Gehäuse 102, ein erstes elektrisch betriebenes Element in Form einer Steuereinrichtung 104, ein zweites elektrisch betriebenes Element in Form eines Sensors 106, eine 12C-Verbindung 107 zur Datenübertragung zwischen der Steuereinrichtung 104 und dem Sensor 106, ein drittes elektrisch betriebenes Element in Form eines Heizelements 108, ein Bauteil 110 in Form eines Griffelements, eine Signalverarbeitungseinheit 112, eine Kabelverbindung 113 zwischen der Signalverarbeitungseinheit 112 und dem Sensor 106 zur Energieversorgung des Sensors 106, und eine Schnittstelle 114 für eine Verbindung mit einem Grundgerät auf.

Das Gehäuse 102 des Zubehörteils 100 weist eine Wandung 116 auf, die einen Aufnahmebereich 118 zur Aufnahme von Lebensmitteln bildet. Das Bauteil 110 bzw. das Griffelement ist an der Wandung 116 angeordnet. Die Steuereinrichtung 104 ist über die Kabelverbindung 113 mit der Signalverarbeitungseinheit 112 verbunden. Der Sensor 106 ist über die I2C-Verbindung 107 mit der Signalverarbeitungseinheit 112 verbunden. Die Steuereinrichtung 104 und der Sensor 106 sind in dem Bauteil 110 integriert. Bei einer Alternativausbildung kann der Sensor 106 eine passive Komponente sein, und mit der Signalverarbeitungseinheit 112 über die Steuereinheit 104 verbunden sein. Dadurch kann auf die hier dargestellte direkte Verbindung zwischen der Signalverarbeitungseinheit 112 und dem Sensor 106 verzichtet werden.

Die Schnittstelle 114 weist ein Kontaktmodul 120, ein Heizungsversorgungsmodul 122 und ein Erdungselement 124 auf. Das Heizelement 108 ist mit dem Heizungsversorgungsmodul 122 verbunden und die Signalverarbeitungseinheit 112 ist mit dem Kontaktmodul 120 verbunden. Somit werden das Heizelement 108 und die Signalverarbeitungseinheit 112 mit separaten Kontakten zum Grundgerät versorgt.

Die Signalverarbeitungseinheit 112 ist dazu ausgebildet, auf der Grundlage eines über das Kontaktmodul 120 aus einem dann angeschlossenen Grundgerät empfangenen Signals eine erste Signalkomponente und eine zweite Signalkomponente mit Daten auszugeben. Die erste Signalkomponente dient dann zur Energieversorgung des Sensors 106 und der Steuereinrichtung 104. Die zweite Signalkomponente ist Trägerin von Daten und wird an die Steuereinrichtung 104 weitergeleitet.

Die Steuereinrichtung 104 ist wiederum dazu eingerichtet, die Daten aus der zweiten Signalkomponente zu ermitteln und bei der Steuerung des Sensors 106 zu berücksichtigen.

Der Sensor ist zum Erfassen von Messdaten und zur Ausgabe der Messdaten an die Steuereinrichtung 104 eingerichtet. Die Steuereinrichtung 104 ist wiederum dazu eingerichtet, die Messdaten zu verarbeiten und an die Signalverarbeitungseinheit 112 für eine Übertragung weiterzuleiten, hier gemäß einem UART-Protokoll. Die Signalverarbeitungseinheit 112 ist dazu ausgebildet, ein elektrisches Signal derart zu modulieren und auszugeben, dass das ausgegebene Signal Träger der durch die Steuereinrichtung 104 aufbereiteten Messdaten ist. Das Kontaktmodul 120 ist dazu ausgebildet, das durch die Signalverarbeitungseinheit 112 modulierte elektrische Signal über den elektrischen Kontakt an ein dann angeschlossenes Grundgerät zu senden.

Ein weiteres Zubehörteil 126 in Form einer Messereinheit 126 ist am Gehäuse 102 des als Kochgefäß ausgebildeten Zubehörteils 100 angeordnet.

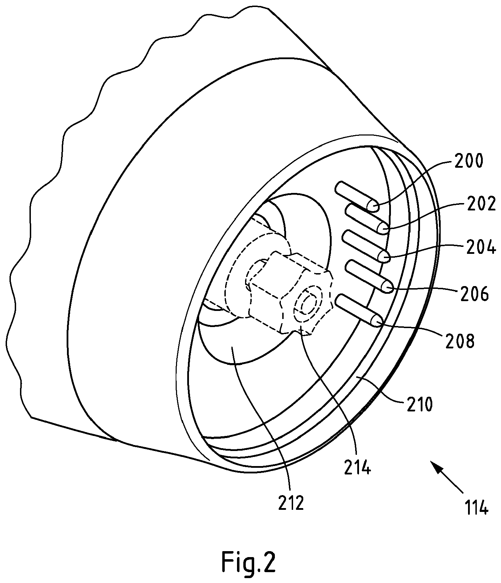

Fig. 2 zeigt die Schnittstelle 114 des Zubehörteils 100 aus der Fig. 1 in einer Detailansicht.

Die Schnittstelle 114 weist insgesamt fünf Kontaktpins auf: ein erster Kontaktpin 200 und ein zweiter Kontaktpin 202 bilden das Kontaktmodul 120 und sind jeweils für einen elektrischen Kontakt mit korrespondierenden Kontaktgegenelementen eines Grundgeräts und zum Empfang eines elektrischen Signals über den elektrischen Kontakt ausgebildet. Ein dritter Kontaktpin 204 dient als Erdungselement 124 zum Erden des Zubehörteils 100 durch Kontakt mit einem Erdungsgegenelement des Grundgeräts. Ein vierter Kontaktpin 206 und ein fünfter Kontaktpin 208 dienen der Energieversorgung des Heizelements 108 des Zubehörteils 100 und bilden so das Heizungsversorgungsmodul 122.

Neben dem Kontaktmodul 120, dem Heizungsversorgungsmodul 122 und dem Erdungselement 124 weist die Schnittstelle 114 ein Verbindungselement 210 zur mechanischen Verbindung des Zubehörteils 100 mit dem Grundgerät auf.

Die Schnittstelle 114 weist ferner eine durchdringende Öffnung 212 zur Aufnahme der Messereinheit 126 auf. Die Messereinheit 126 ist mit einem Kupplungselement 214 zur Kupplung mit einem Antrieb eines Grundgeräts ausgebildet.

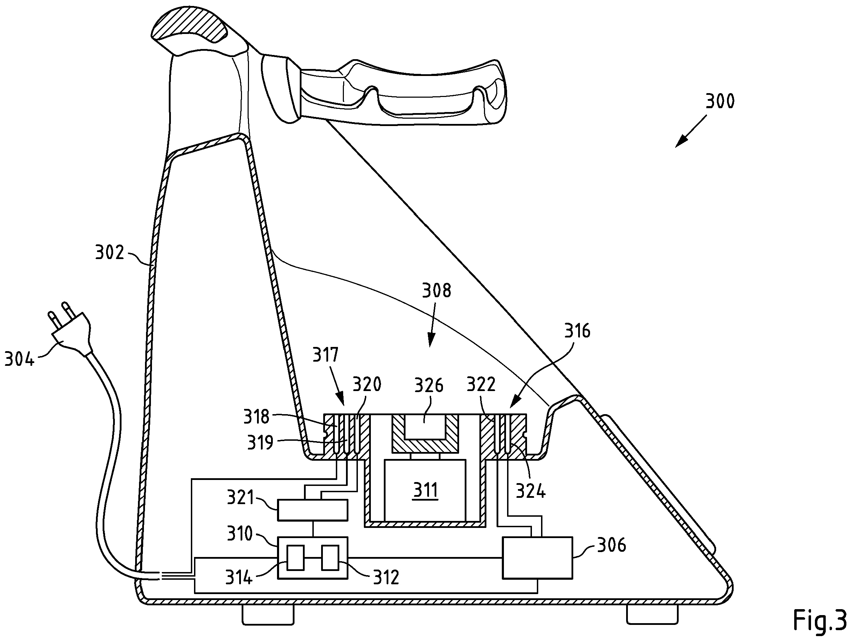

Fig. 3 zeigt ein Ausführungsbeispiel für ein Grundgerät 300 für ein Küchengerät. Das Grundgerät 300 weist ein Gehäuse 302, ein Energieversorgungselement 304, eine Steuereinrichtung 310, einen Antrieb 311, eine Schnittstelle 308 und eine Signalverarbeitungseinheit 306 auf.

Das Energieversorgungselement 304 ist mit der Steuereinrichtung 310 und mit der Signalverarbeitungseinheit 306 verbunden. So werden sowohl die Steuereinrichtung 310 als auch die Signalverarbeitungseinheit 306 mit Strom versorgt. Die Signalverarbeitungseinheit 306306 ist mit der Steuereinrichtung 310 und mit der Schnittstelle 308 verbunden.

Die Steuereinrichtung 310 weist einen Prozessor 312 und einen Datenspeicher 314 auf und ist dazu ausgebildet, Steuerinformationen, beispielsweise Steuerbefehle betreffend einen Sensor oder Firmware auszugeben und an die Signalverarbeitungseinheit 306 weiterzuleiten.

Die Signalverarbeitungseinheit 306 ist dazu ausgebildet, ein elektrisches Signal mit einer ersten Signalkomponente und mit einer zweiten Signalkomponente auszugeben. Hierzu kann die Signalverarbeitungseinheit 306 eine Spannung, die durch das Energieversorgungselement 304 bereitgestellt wird, als Grundlage verwenden und derart modulieren, dass das ausgegebene Signal dann die erste und die zweite Signalkomponente aufweist. Die Modulation erfolgt auf der Grundlage eines vorgegebenen Grundsignals, insbesondere auf der Grundlage einer vorgegebenen Grundspannung, beispielsweise ca. 12 V Gleichspannung, um die erste Signalkomponente bereitzustellen, und auf der Grundlage der durch die Steuereinrichtung 310 ausgegebenen Steuerinformationen, um die zweite Signalkomponente bereitzustellen. Somit moduliert die Signalverarbeitungseinheit 306 das Ausgangssignal derart, dass die Daten der zweiten Signalkomponente den Steuerinformationen entsprechen. Anschließend leitet die Signalverarbeitungseinheit 306 das modulierte Signal an die Schnittstelle 308 bzw. an ein Kontaktmodul 316 der Schnittstelle 308 zur Übertragung auf ein angeschlossenes Zubehörteil weiter.

Die Schnittstelle 308 weist ein Kontaktmodul 316, ein Heizungsversorgungskontaktmodul 317 und ein Erdungselement 318 auf. Das Heizungsversorgungskontaktmodul 317 weist zwei Gegenstücke 319, 320 für Kontaktpins auf, die mit einer Heizungsteuerung 321 verbunden sind. Das Kontaktmodul 316 weist zwei Kontaktelemente 322, 324 in Form von Gegenstücken für Kontaktpins auf, wobei die Kontaktelemente 322, 324 für einen elektrischen Kontakt mit dem Kontaktmodul 120 des Zubehörteils 100 aus der Fig. 1 und 2 ausgebildet sind. Die Kontaktelemente sind zur Übertragung des durch die Signalverarbeitungseinheit 306 modulierten Signals an die Kontaktelemente eines angeschlossenen Zubehörteils 100 ausgebildet.

Zusätzlich ist ein Kupplungsgegenelement 326 für eine mechanische Kupplung des Antriebs 311 mit dem Kupplungselement 214 des Zubehörteils vorgesehen.

Insgesamt ist somit das Grundgerät 300 dazu ausgebildet, ein Signal an ein angeschlossenes Zubehörteil zu übermitteln, wobei das Signal zugleich zur Energieversorgung des Zubehörteils 100 und zur Übermittlung von Daten, hier Steuerinformationen, geeignet ist.

Daneben ist das Grundgerät 300 zusätzlich dazu ausgebildet, ein durch ein angeschlossenes Zubehörteil bereitgestelltes Signal zu empfangen und Daten hieraus zu extrahieren.

Hierzu ist das Kontaktmodul 316 des Grundgeräts 300 zum Empfang eines elektrischen Signals über den elektrischen Kontakt ausgebildet. Weiterhin ist die Signalverarbeitungseinheit 306 dazu ausgebildet ist, auf der Grundlage des empfangenen Signals eine Signalkomponente mit Daten auszugeben, zum Beispiel durch Demodulation des empfangenen Signals. Ferner ist die Steuereinrichtung 310 dazu eingerichtet, das demodulierte Signal bzw. die extrahierte Signalkomponente auszuwerten und hieraus Daten zu ermitteln.

Somit ist das Grundgerät 300 für eine bidirektionale Datenübertragung oder Kommunikation über einen physischen Kontakt mit einem Zubehörteil ausgebildet.

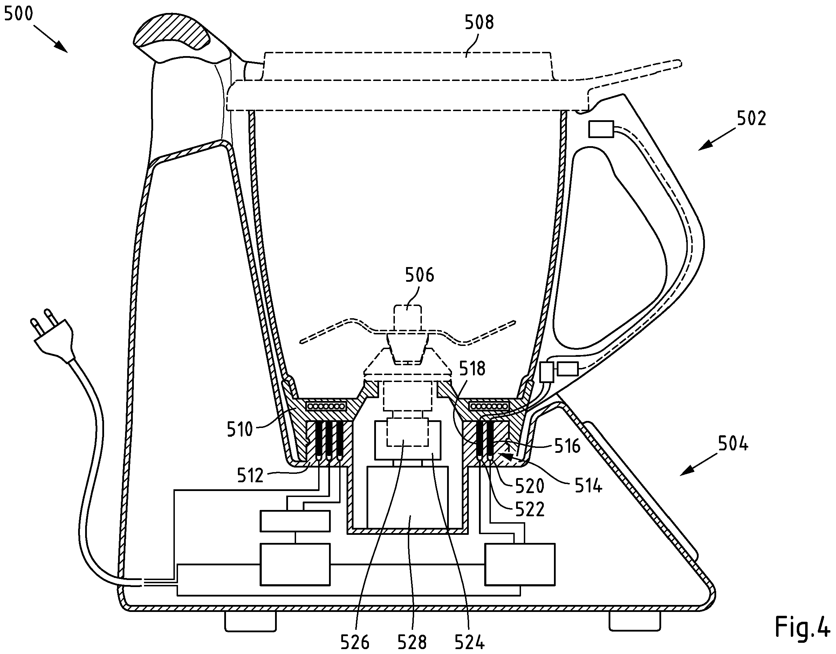

Fig. 4 zeigt ein Ausführungsbeispiel für ein Küchengerät 500 in einem montierten Zustand. Das Küchengerät 500 weist ein Zubehörteil 502, das wie das Zubehörteil 100 aus den Fig. 1 und 2 ausgebildet ist, und ein Grundgerät 504 auf, das wie das Grundgerät 300 aus der Fig. 3 ausgebildet ist. Weiter weist das Küchengerät 500 ein erstes Zusatzzubehörteil in Form einer Messereinheit 506 und ein zweites Zusatzzubehörteil in Form eines Deckels 508 auf.

Die Schnittstelle 510 des Zubehörteils 502 und die Schnittstelle 512 des Grundgeräts 504 sind miteinander verbunden. Hierzu sind die Kontaktelemente 516, 518 des Zubehörteils 502 mit den Kontaktgegenelementen 520, 522 des Grundgeräts 504 in Kontakt miteinander gebracht. Daneben sind das Erdungselement 524 des Zubehörteils 502 mit dem Erdungsgegenelement 526 des Grundgeräts 504 verbunden.

Die Schnittstelle 512 des Grundgeräts 504 weist ferner ein Kupplungsgegenelement 528 zur Kupplung mit einem Kupplungselement 530 des Zusatzzubehörteils 506 auf, wobei das Kupplungsgegenelement 528 zur Übertragung einer Kraft aus dem Antrieb 532 des Grundgeräts 504 auf das Zusatzzubehörteil 506 ausgebildet ist.

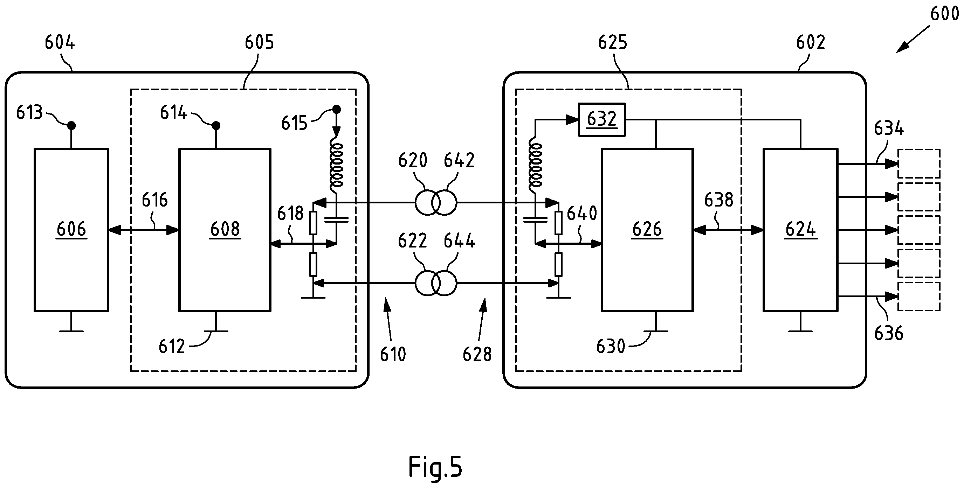

Fig. 5 zeigt ein erstes Ausführungsbeispiel eines Schaltplans eines Systems 600 mit einem Zubehörteil 602 und mit einem Grundgerät 604 in einer schematischen Darstellung.

Auf der linken Seite der Fig. 5 sind das Grundgerät 604 bzw. elektrische Bestandteile des Grundgeräts schematisch dargestellt. Dieses weist eine Signalverarbeitungseinheit 605 und eine Steuereinrichtung 606 auf. Die Signalverarbeitungseinheit 605 weist wiederum eine integrierte Schaltung 608 zur Verarbeitung von Mixed-Signalen und ein Kontaktmodul 610 auf. Die Steuereinrichtung 606, die integrierte Schaltung 608 und das Kontaktmodul 610 sind jeweils über einen Erdungskontakt, wie zum Beispiel dem Erdungskontakt 612 der integrierte Schaltung 608 geerdet. Die Steuereinrichtung 606 und die integrierte Schaltung 608 sind jeweils mit einer Versorgungsspannung versorgt. Hierzu sind an der Steuereinrichtung 606 eine Versorgungsverbindung 613 und an der integrierten Schaltung 608 eine Versorgungsverbindung 614 vorgesehen. Die Versorgungsverbindungen 613 und 614 stellen eine Versorgungsspannung, beispielsweise ca. 3,3 V, bereit. Eine weitere Versorgungsverbindung 615 ist zur Bereitstellung einer Grundspannung, beispielweise ca. 12 V, vorgesehen. Die Grundspannung kann zur Bereitstellung der ersten Signalkomponente durch die integrierte Schaltung 608 dienen.

Die Steuereinrichtung 606 und die integrierte Schaltung 608 sind für eine bidirektionale Signalübertragung 616 miteinander verbunden. Die integrierte Schaltung 608 ist ebenfalls für eine bidirektionale Signalübertragung 618 mit dem Kontaktmodul 610 verbunden. Das Kontaktmodul 610 weist ein erstes Kontaktelement 620 und ein zweites Kontaktelement 622 auf.

Auf der rechten Seite der Fig. 5 sind das Zubehörteil 602 bzw. elektrische Bestandteile des Zubehörteils dargestellt. Dieses weist eine Steuereinrichtung 624 und eine Signalverarbeitungseinheit 625 auf. Die Signalverarbeitungseinheit 625 weist wiederum eine integrierte Schaltung 626 zur Verarbeitung von Mixed-Signalen und ein Kontaktmodul 628 auf. Die Steuereinrichtung 624, die integrierte Schaltung 626 und das Kontaktmodul 628 sind jeweils über einen Erdungskontakt, wie zum Beispiel den Erdungskontakt 630 der integrierten Schaltung 626, geerdet. Zusätzlich weist die Signalverarbeitungseinheit 625 einen Spannungsversorger 632 in Form eines sogenannten "Low-Drop-Out" auf, der dazu eingerichtet ist, aus einem durch das Kontaktmodul 628 empfangenen Signal eine Versorgungsspannung, beispielsweise ca. 3,3 V zu extrahieren, und der Steuereinrichtung 624 sowie der integrierten Schaltung 626 zuzuführen. Das empfangene Signal kann eine höhere Spannung aufweisen, beispielsweise ca. 12 V.

Die Steuereinrichtung 624 ist für eine Verbindung mit Sensoren des Zubehörteils ausgebildet, beispielsweise mit Hallsensoren oder Temperaturfühlern, wobei die Verbindung 634, 636 zur Übertragung von Messdaten, Kalibrierwerten oder Firmware eingerichtet ist. Daneben sind die Steuereinrichtung 624 und die Signalverarbeitungseinheit 625 bzw. die integrierte Schaltung 626 für eine bidirektionale Signalübertragung 638 miteinander verbunden. Die integrierte Schaltung 626 ist ebenfalls für eine bidirektionale Signalübertragung 640 mit dem Kontaktmodul 628 verbunden. Das Kontaktmodul 628 weist ein erstes Kontaktelement 642 und ein zweites Kontaktelement 644 auf.

Die Fig. 5 zeigt eine Konstellation, bei der das Kontaktmoduls 610 des Grundgeräts und das Kontaktmodul 628 des Zubehörteils über einen physischen Kontakt miteinander verbunden sind, so dass ein Signal zwischen dem Grundgerät 300 und dem Zubehörteil übertragen werden kann. Hierzu ist das erste Kontaktelement 620 des Grundgeräts in physischem Kontakt mit dem ersten Kontaktelement 642 des Zubehörteils gebracht und das zweite Kontaktelement 622 des Grundgeräts ist in physischem Kontakt mit dem zweiten Kontaktelement 644 des Zubehörteils gebracht.

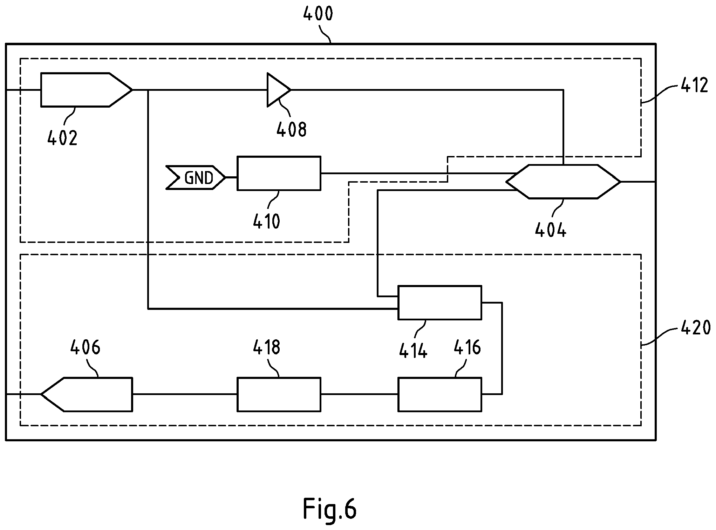

Fig. 6 zeigt ein Ausführungsbeispiel für eine integrierte Schaltung 400 zur Verarbeitung von Mixed-Signalen, beispielsweise für eine Signalverarbeitungseinheit für das Zubehörteil aus der Fig. 5 oder für das Grundgerät aus der Fig. 5. Die integrierte Schaltung 400 weist einen Eingangskanal 402, einen Eingangs-Ausgangskanal 404 und einen Ausgangskanal 406 auf.

Die integrierte Schaltung 400 ist zur Verarbeitung von Mixed-Signalen vorgesehen, also zur Verarbeitung von sowohl analogen als auch digitalen elektrischen (Eingangs-) Signalen. Hierzu ist die integrierte Schaltung 400 wie folgt ausgebildet.

Der Eingangskanal 402 ist über einen Inverter 408 mit dem Eingangs- Ausgangskanal 404. Der Eingangs- Ausgangskanal 404 ist wiederum mit einem Oszillator 410 verbunden. Der Eingangskanal 402, der Inverter 408, der Oszillator 410 und der Eingangs- Ausgangskanal 404 bilden zusammen einen Sendepfad 412. Dabei ist der Eingangskanal 402 dazu ausgebildet, eine Signalkomponente mit Daten in digitaler Form von einer Steuereinrichtung, beispielsweis von der Steuereinrichtung des Zubehörteils oder von der Steuereinrichtung des Grundgeräts zu empfangen und an den Inverter 408 weiterzuleiten. Der Inverter 408 ist dazu ausgebildet, die Signalkomponente mit Daten in digitaler Form zu invertieren, indem hohen Bitzustände zu niedrigen Bitzuständen umgewandelt werden und umgekehrt, und an den Eingangs- Ausgangskanal 404 weiterzuleiten. Der Oszillator 410 ist dazu ausgebildet, eine modulierte Signalkomponente an den Eingangs- Ausgangskanal 404 auszugeben. Der Eingangs- Ausgangskanal 404 ist dazu ausgebildet, auf der Grundlage der Signalkomponente mit digitalen Daten und der modulierten Signalkomponente eine elektrische Signalkomponente mit Daten auszugeben, beispielsweise an das Kontaktmodul des Zubehörteils oder an das Kontaktmodul des Grundgeräts.

Daneben ist der Eingangskanal 402 mit einem Unterdrückungselement 414 verbunden. Das Unterdrückungselement 414 ist wiederum einerseits mit dem Eingangs- Ausgangskanal 404 und andererseits über ein Umwandlungsmodul 416 und ein Filterungsmodul 418 mit dem Ausgangskanal 406 verbunden. Das Unterdrückungselement 414, der Eingangs- Ausgangskanal 404, das Umwandlungsmodul 416, das Filterungsmodul 418 und der Ausgangskanal 406 bilden zusammen einen Empfangspfad 420.

Dabei ist der Eingangs- Ausgangskanal 404 dazu ausgebildet, ein elektrisches Signal mit einer Signalkomponente mit Daten zu empfangen, beispielsweise von den Kontaktmodul des Zubehörteils oder von dem Kontaktmodul des Grundgeräts, und das Unterdrückungselement 414 dazu eingerichtet, auf der Grundlage der empfangenen elektrischen Signalkomponente eine Signalkomponente auszugeben, woraus die über den Sendepfad gesendete Signalkomponente herausgefiltert bzw. unterdrückt wurde. Dann ist das Umwandlungsmodul 416 dazu ausgebildet, die durch das Unterdrückungselement 414 ausgegebene elektrische Signalkomponente in eine Signalkomponente mit digitalen Daten umzuwandeln. Mit dem Filterungsmodul 418 werden ggf. Bitfehlern aus der Signalkomponente, die durch das Umwandlungsmodul 416 ausgegeben wird, herausgefiltert. Der Ausgangskanal 406 ist dazu ausgebildet, die Signalkomponente mit digitalen Daten auszugeben, beispielsweise an die Steuereinrichtung des Zubehörteils oder an die Steuereinrichtung des Grundgeräts.

Aktive elektronische Komponente der integrierte Schaltung 400 wie zum Beispiel der Oszillator 410 werden über eine Versorgungsverbindung, beispielsweise die Versorgungsverbindung des Grundgeräts, oder über den Spannungsversorger des Zubehörteils mit Energie versorgt.

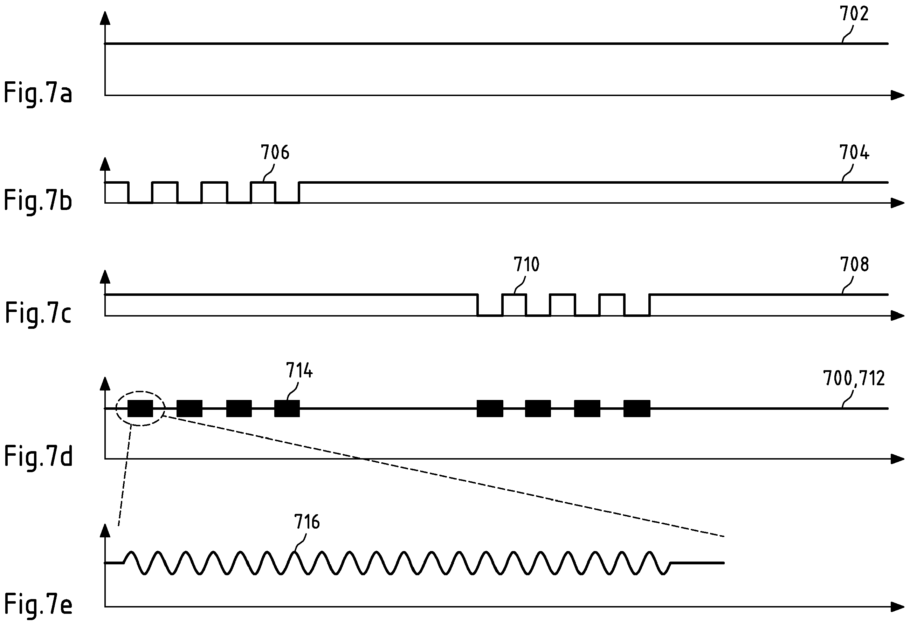

Fig. 7a bis 7e zeigen eine schematische Darstellung eines Ausführungsbeispiels für ein elektrisches Signal 700, das im System 600 aus der Fig. 5 übertragen wird. Das Signal 700 ist für eine bidirektionale Datenübertragung bzw. für eine Kommunikation in sogenanntem halb-Duplex zwischen dem Zubehörteil 602 und dem Grundgerät 604 geeignet.

Fig. 7a zeigt ein erstes Ausgangssignal 702, das in die Signalverarbeitungseinheit entweder des Zubehörteils oder des Grundgeräts eingespeist und dort moduliert wird. Das erste Ausgangssignal 702 ist ein elektrisches Signal und weist eine Grundspannung von ca. 12 V auf.

Fig. 7b zeigt ein zweites Ausgangssignal 704, das durch die Steuereinrichtung 624 des Zubehörteils bereitgestellt und in die Signalverarbeitungseinheit 625 des Zubehörteils eingespeist wird. Das zweite Ausgangssignal 704 weist einzelne Pulse 706 auf, die Daten, ggf. zum Beispiel Messdaten in digitaler Form entsprechen. Die Daten können über ein UART-Protokoll codiert übertragen werden.

Fig. 7c zeigt ein drittes Ausgangssignal 708, das durch die Steuereinrichtung 606 des Grundgeräts bereitgestellt und in die Signalverarbeitungseinheit 605 des Grundgeräts eingespeist wird. Das dritte Ausgangssignal 708 weist einzelne Pulse 710 auf, die Daten in digitaler Form, ggf. zum Beispiel Steuerinformationen entsprechen.

Fig. 7d zeigt ein elektrisches Signal 712, das Modulationen 714 sowohl durch die Signalverarbeitungseinheit 605 des Grundgeräts als auch durch die Signalverarbeitungseinheit 625 des Zubehörteils aufweist. So weist das elektrische Signal 712 die Grundspannung des ersten Ausgangssignals 702 und Modulationen 714 auf, die den digitalen Daten des zweiten Ausgangssignals 704 und des dritten Ausgangssignals 708 entsprechen

Fig. 7e zeigt einen vergrößerten Ausschnitt des modulierten Signals 712 aus der Fig. 7d. So ist die Modulation 714 zu sehen, die einer On-Off-Key-Modulation 716 entspricht.

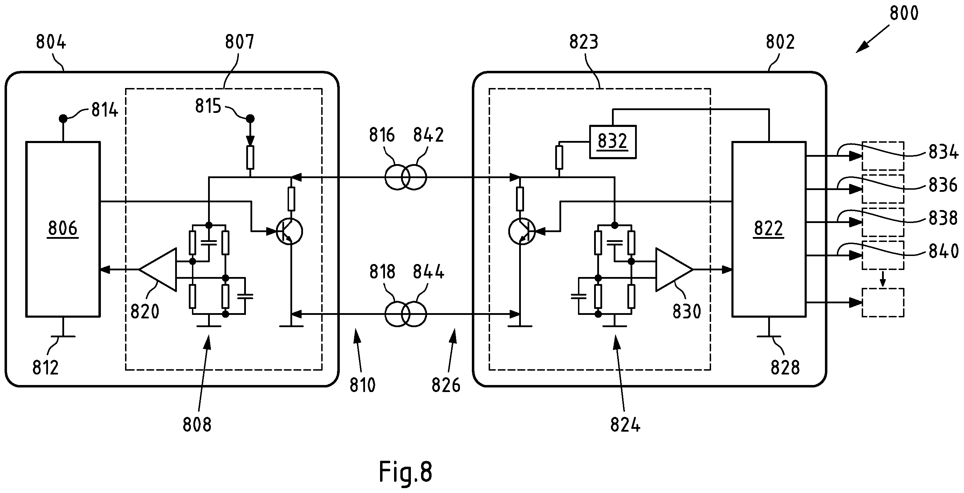

Fig. 8 zeigt ein zweites Ausführungsbeispiel eines Schaltplans eines Systems 800 mit einem Zubehörteil 802 und mit einem Grundgerät 804 in einer schematischen Darstellung.

Auf der linken Seite der Fig. 8 sind das Grundgerät 804 bzw. elektrische Bestandteile des Grundgeräts schematisch dargestellt. Dieses weist eine Steuereinrichtung 806 und eine Signalverarbeitungseinheit 807 auf. Die Signalverarbeitungseinheit 807 weist wiederum eine Operationsverstärkerschaltung 808 und ein Kontaktmodul 810 auf. Die Steuereinrichtung 806, die Operationsverstärkerschaltung 808 und das Kontaktmodul 810 sind jeweils über einen Erdungskontakt, wie zum Beispiel den Erdungskontakt 812 der Operationsverstärkerschaltung 808, geerdet. Die Steuereinrichtung 806 steht über eine Versorgungsverbindung 814 unter Spannung, beispielsweise ca. 3,3 V. Daneben steht das Kontaktmodul 810 über eine weitere Versorgungsverbindung 815, die eine Grundspannung, beispielsweise ca. 12 V, bereitstellt. Das Kontaktmodul 810 weist ein erstes Kontaktelement 816 und ein zweites Kontaktelement 818 auf.

Die Steuereinrichtung 806 ist für eine Signalübertragung zu dem Zubehörteil mit dem Kontaktmodul 810 verbunden, also in der Senderichtung. Für die Empfangsrichtung, also zum Empfangen eines Signals von dem Zubehörteil, ist das Kontaktmodul 810 mit der Operationsverstärkerschaltung 808 verbunden, die einen Komparator 820 aufweist. Die Operationsverstärkerschaltung 808 ist wiederum mit der Steuereinrichtung 806 verbunden.

Auf der rechten Seite der Fig. 8 ist das Zubehörteil 802 bzw. elektrische Bestandteile des Zubehörteils schematisch dargestellt. Dieses weist eine Steuereinrichtung 822 und eine Signalverarbeitungseinheit 823 auf. Die Signalverarbeitungseinheit 823 weist wiederum eine Operationsverstärkerschaltung 824 und ein Kontaktmodul 826 auf. Die Steuereinrichtung 822, die Operationsverstärkerschaltung 824 und das Kontaktmodul 826 sind jeweils über einen Erdungskontakt, wie zum Beispiel den Erdungskontakt 828 der Operationsverstärkerschaltung 824, geerdet. Die Operationsverstärkerschaltung 824 seitens des Zubehörteils ist ähnlich ausgebildet, wie die Operationsverstärkerschaltung 808 seitens des Grundgeräts, und weist ebenfalls einen Komparator 830 auf. Zusätzlich weist die Signalverarbeitungseinheit 823 seitens des Zubehörteils einen Spannungsversorger 832 in Form eines sogenannten "Low-Drop-Out" (LDO) auf. Die Steuereinrichtung 822 weist Verbindungen 834, 836, 838, 840 mit Sensoren, beispielsweise Hall-Sensoren und Temperatursensoren auf.

Das Kontaktmodul 826 weist ein erstes Kontaktelement 842 und ein zweites Kontaktelement 844 auf. Das Kontaktmodul 826 ist mit der Operationsverstärkerschaltung 824 verbunden, die wiederum mit der Steuereinrichtung 822 verbunden ist. Im Einsatz extrahiert der Spannungsversorger 832 bzw. der LDO eine Spannung, beispielsweise ca. 3,3 V, aus einem Signal, das durch das Grundgerät zur Verfügung gestellt wird. Diese Spannung wird auf der Grundlage der ersten Signalkomponente des Signals extrahiert. Diese extrahierte Spannung wird dann den elektrisch betriebenen Elementen des Zubehörteils zur Verfügung gestellt, hier der Steuereinrichtung 822 und Sensoren, die mit der Steuereinrichtung 822 verbunden sind.

Die Steuereinrichtung 822 ist für eine Signalübertragung zu dem Grundgerät mit dem Kontaktmodul 826 verbunden. Daneben ist die Steuereinrichtung 822 mit der Operationsverstärkerschaltung 824 und mit dem Kontaktmodul 826 verbunden, um ein Signal zu empfangen und die zweite Signalkomponente des empfangenen Signals zu extrahieren und Daten hieraus zu ermitteln.

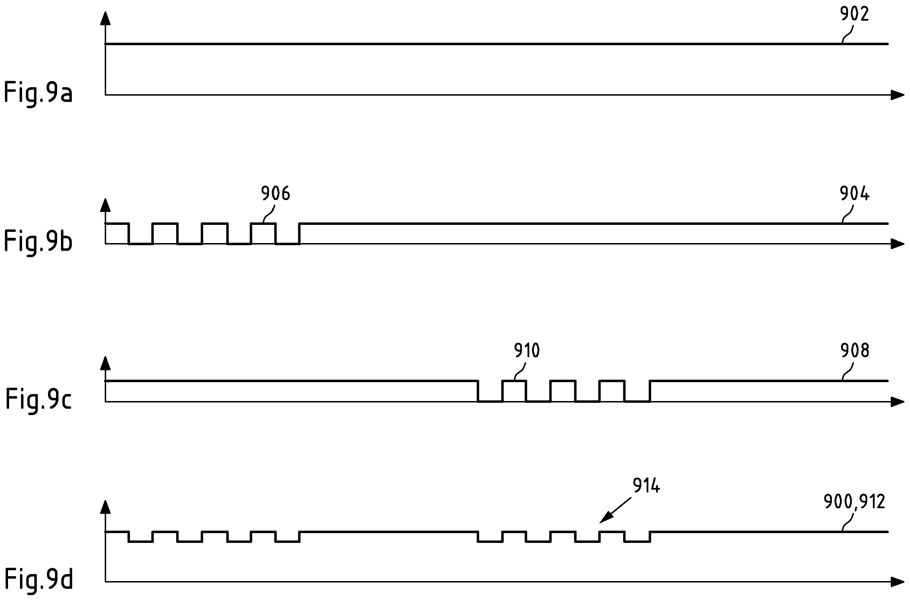

Fig. 9a bis 9d zeigen eine schematische Darstellung eines Ausführungsbeispiels für ein elektrisches Signal 900, das im System 800 aus der Fig. 8 übertragen wird. Das Signal 900 ist für eine bidirektionale Datenübertragung bzw. für eine Kommunikation in sogenannten halb-Duplex zwischen dem Zubehörteil 802 und dem Grundgerät 804 geeignet.

Fig. 9a zeigt ein erstes Ausgangssignal 902mit einer Grundspannung, die zwischen dem Grundgerät und dem Zubehörteil bzw. deren Kontaktmodulen angelegt wird. Vorzugsweise wird diese Grundspannung durch das Grundgerät bereitgestellt. Das erste Ausgangssignal 902 weist in dem Beispiel der Fig. 9a eine Grundspannung von ca. 12 V auf.

Fig. 9b zeigt ein zweites Ausgangssignal 904, das durch die Steuereinrichtung 822 des Zubehörteils bereitgestellt und in die Operationsverstärkerschaltung 824 des Zubehörteils eingespeist wird. Das zweite Ausgangssignal 904 weist einzelne Pulse 906 auf, die Daten, ggf. zum Beispiel Messdaten entsprechen. Die Daten können über ein UART-Protokoll codiert übertragen werden.

Fig. 9c zeigt ein drittes Ausgangssignal 908, das durch die Steuereinrichtung 806 des Grundgeräts bereitgestellt und in die Operationsverstärkerschaltung 808 des Grundgeräts eingespeist wird. Das dritte Ausgangssignal 908 weist einzelne Pulse 910 auf, die Daten, ggf. zum Beispiel Steuerinformationen entsprechen.

Fig. 9d zeigt ein moduliertes Signal 912, das durch die Operationsverstärkerschaltungen jeweils auf der Grundlage des ersten Ausgangssignals 902 und des zweiten Ausgangssignals 904 bzw. auf der Grundlage des ersten Ausgangssignals 902 und des dritten Ausgangssignals 908 ausgegeben wird. So entspricht das modulierte Signal 912 dem ersten Ausgangssignal 902 mit einer Modulation 914 gemäß sowohl dem zweiten Ausgangssignal 904 als auch dem dritten Ausgangssignal 908. Im Ergebnis entspricht das modulierte Signal 912 dem Grundsignal 902, das mit einer Modulation 914 überlagert ist, die den einzelnen Impulsen 906 aus dem zweiten Ausgangssignal 904 und den einzelnen Impulsen 910 aus dem dritten Ausgangssignal 908 entspricht.

Im Einsatz wird das Signal 900 beispielsweise durch das Grundgerät wie in der Fig. 8 dargestellt zur Verfügung gestellt und über in Kontakt gebrachte Kontaktmodule des Grundgeräts und eines Zubehörteils - wie in der Fig. 8 ebenfalls gezeigt - übertragen. Die Operationsverstärkerschaltung des Zubehörteils filtert dann die Modulationen mithilfe von einem Hochpassfilter und einem Tiefpassfilter heraus, um der Steuereinrichtung des Zubehörteils dann die so extrahierte zweite Signalkomponente bereitzustellen. Daneben extrahiert der Spannungsversorger bzw. LDO die erste Signalkomponente heraus, die dem ersten Ausgangssignal wie in der Fig. 9a gezeigt entspricht, um mit dieser dann die Steuereinrichtung des Zubehörteils mit Energie zu versorgen.

## Patentansprüche

1. Zubehörteil (100, 502, 602, 802) für ein Küchengerät (500),
- mit einem Gehäuse (102) und
- mit mindestens einem elektrisch betriebenen Element (104, 106, 624, 822), **dadurch gekennzeichnet,**
- **dass** ein Kontaktmodul (120, 628, 826) vorgesehen ist,
- wobei das Kontaktmodul (120, 628, 826) für einen elektrischen Kontakt (514) mit einem Kontaktmodul (316) eines Grundgeräts (300, 504, 604, 804) des Küchengeräts (500) und zum Empfang eines elektrischen Signals (700, 900) über den elektrischen Kontakt (514) ausgebildet ist, und
- **dass** eine Signalverarbeitungseinheit (112, 625, 823) vorgesehen ist,
- wobei die Signalverarbeitungseinheit (112, 625, 823) dazu ausgebildet ist, auf der Grundlage des empfangenen Signals (700, 900) eine erste Signalkomponente (702, 902) zur Energieversorgung des mindestens einen elektrisch betriebenen Elements (104, 106, 624, 822) auszugeben, und auf der Grundlage des empfangenen Signals (700, 900) eine zweite Signalkomponente (704, 708, 904, 908) mit Daten auszugeben.

2. Zubehörteil (100, 502, 602, 802) nach Anspruch 1,
**dadurch gekennzeichnet,**
- **dass** eine Steuereinrichtung (104, 624, 822) vorgesehen ist, und
- **dass** die Steuereinrichtung (104, 624, 822) dazu eingerichtet ist, die Daten aus der durch die Signalverarbeitungseinheit (112, 625, 823) ausgegebenen zweiten Signalkomponente (704, 708, 904, 908) zu ermitteln.

3. Zubehörteil (100, 502, 602, 802) nach einem der voranstehenden Ansprüche,
**dadurch gekennzeichnet,**
- **dass** die Daten Steuerinformationen für das mindestens ein elektrisch betriebenes Element (104, 106, 624, 822) entsprechen.

4. Zubehörteil (100, 502, 602, 802) nach einem der voranstehenden Ansprüche,
**dadurch gekennzeichnet,**
- **dass** die Signalverarbeitungseinheit (112, 625, 823) dazu ausgebildet ist, auf der Grundlage eines durch Kontakt mit dem Grundgerät (300, 504, 604, 804) übermittelten Grundsignals, insbesondere auf der Grundlage einer durch Kontakt mit dem Grundgerät (300, 504, 604, 804) angelegten Grundspannung, ein moduliertes elektrisches Signal (700, 900) auszugeben, wobei das modulierte elektrisches Signal (700, 900) eine Signalkomponente (704, 708, 904, 908) mit Daten aufweist, und
- **dass** das Kontaktmodul (120, 628, 826) dazu ausgebildet ist, das durch die Signalverarbeitungseinheit (112, 625, 823) ausgegebene modulierte elektrische Signal (700, 900) über den elektrischen Kontakt (514) an das Grundgerät (300, 504, 604, 804) zu übermitteln.

5. Zubehörteil (100, 502, 602, 802) nach Anspruch 4,
**dadurch gekennzeichnet,**
- **dass** mindestens ein Sensor (106) zur Ausgabe von Messdaten vorgesehen ist, und
- **dass** die Daten der Signalkomponente (704, 708, 904, 908) des durch die Signalverarbeitungseinheit (112, 625, 823) ausgegebenen modulierten elektrischen Signals (700, 900) den Messdaten entsprechen.

6. Zubehörteil (100, 502, 602, 802) nach einem der voranstehenden Ansprüche,
**dadurch gekennzeichnet,**
- **dass** das Kontaktmodul (120, 628, 826) ein erstes Kontaktelement (200, 516, 642, 842) und ein zweites Kontaktelement (202, 518, 644, 844) aufweist.

7. Zubehörteil (100, 502, 602, 802) nach einem der voranstehenden Ansprüche,
**dadurch gekennzeichnet,**
- **dass** ein eine Wandung (116) aufweisender Aufnahmebereich (118) zur Aufnahme von Lebensmitteln vorgesehen ist,
- **dass** an der Wandung (116) ein Bauteil (110) angeordnet ist, und
- **dass** das mindestens ein elektrisch betriebenes Element (104, 106, 624, 822) in dem Bauteil (110) integriert ist.

8. Grundgerät (300, 504, 604, 804) für ein Küchengerät (500)
- mit einem Gehäuse (302) und
- mit einem Energieversorgungselement (304),
**dadurch gekennzeichnet,**
- **dass** eine Signalverarbeitungseinheit (306, 605, 807) vorgesehen ist,
- **dass** die Signalverarbeitungseinheit (306, 605, 807) dazu ausgebildet ist, ein elektrisches Signal (700, 900) mit einer ersten Signalkomponente (702, 902) und mit einer zweiten Signalkomponente (704, 708, 904, 908) auszugeben,
- wobei die erste Signalkomponente (702, 902) zur Energieversorgung mindestens eines elektrisch betriebenen Elements (104, 106, 624, 822) eines Zubehörteils (100, 502, 602, 802) ausgebildet ist, und
- wobei die zweite Signalkomponente (704, 708, 904, 908) Daten aufweist,
- **dass** ein Kontaktmodul (316, 610, 810) vorgesehen ist,
- **dass** das Kontaktmodul (316, 610, 810) für einen elektrischen Kontakt (514) mit einem Kontaktmodul (120, 628, 826) des Zubehörteils (100, 502, 602, 802) für ein Küchengerät (500), insbesondere mit einem Kontaktmodul (120, 628, 826) eines Zubehörteils (100, 502, 602, 802) nach einem der Ansprüche 1 bis 7, ausgebildet ist,
- **dass** das Kontaktmodul (316, 610, 810) zur Übertragung des elektrischen Signals (700, 900) über den elektrischen Kontakt (514) ausgebildet ist.

9. Grundgerät (300, 504, 604, 804) nach Anspruch 8,
**dadurch gekennzeichnet,**
- **dass** eine Steuereinrichtung (310, 606, 806) vorgesehen ist,
- wobei die Steuereinrichtung (310, 606, 806) dazu ausgebildet ist, Steuerinformationen auszugeben, und
- **dass** die Signalverarbeitungseinheit (306, 605, 807) dazu ausgebildet ist, das durch das Kontaktmodul (316, 610, 810) zu übertragende elektrische Signal (700, 900) derart zu modulieren und auszugeben, dass die Daten der zweiten Signalkomponente (704, 708, 904, 908) den Steuerinformationen entsprechen.

10. Grundgerät (300, 504, 604, 804) nach einem der voranstehenden Ansprüche,
**dadurch gekennzeichnet,**
- **dass** das Kontaktmodul (316, 610, 810) zum Empfang eines elektrischen modulierten Signals (700, 900) über den elektrischen Kontakt (514) ausgebildet ist, und
- **dass** die Signalverarbeitungseinheit (306, 605, 807) dazu ausgebildet ist, auf der Grundlage des empfangenen modulierten Signals (700, 900) eine Signalkomponente mit digitalen Daten auszugeben.

11. Grundgerät (300, 504, 604, 804) nach einem der voranstehenden Ansprüche,
**dadurch gekennzeichnet,**
- **dass** das Kontaktmodul (316, 610, 810) ein erstes Kontaktelement (322, 520, 620, 816) und ein zweites Kontaktelement (324, 522, 622, 818) aufweist.

12. Küchengerät (500)
- mit einem Zubehörteil (100, 502, 602, 802) nach einem der Ansprüche 1 bis 7 und
- mit einen Grundgerät (300, 504, 604, 804) nach einem der Ansprüche 8 bis 11.

13. Verfahren zum Betreiben eines Küchengeräts (500) mit einem Grundgerät (300, 504, 604, 804) und mit einem Zubehörteil (100, 502, 602, 802), insbesondere eines Küchengeräts (500) nach Anspruch 12,
- bei dem eine elektrische Verbindung zwischen dem Grundgerät (300, 504, 604, 804) und dem Zubehörteil (100, 502, 602, 802) gebildet wird, indem ein Kontaktmodul (316, 610, 810) des Grundgeräts (300, 504, 604, 804) und ein Kontaktmodul (120, 628, 826) des Zubehörteils (100, 502, 602, 802) in Kontakt (514) gebracht werden,
- bei dem ein erstes elektrisches Signal (700, 900) von dem Grundgerät (300, 504, 604, 804) auf das Zubehörteil (100, 502, 602, 802) über die elektrische Verbindung übertragen wird,
- bei dem mindestens ein elektrisch betriebenes Element (104, 106, 624, 822) des Zubehörteils (100, 502, 602, 802) auf der Grundlage des übertragenen ersten Signals (700, 900) mit Energie versorgt wird, und
- bei dem durch eine Steuereinrichtung (104, 624, 822) des Zubehörteils (100, 502, 602, 802) und auf der Grundlage des übertragenen ersten Signals (700, 900) Daten ermittelt werden.

14. Verfahren nach Anspruch 13,
- bei dem ein zweites elektrisches Signal (700, 900) von dem Zubehörteil (100, 502, 602, 802) auf das Grundgerät (300, 504, 604, 804) über die elektrische Verbindung übertragen wird, und
- bei dem durch eine Steuereinrichtung (310, 606, 806) des Grundgeräts (300, 504, 604, 804) und auf der Grundlage des zweiten Signals (700, 900) Daten ermittelt werden.

15. Signalverarbeitungseinheit (112, 306, 605, 625, 807, 823) für ein Küchengerät (500), insbesondere für ein Zubehörteil (100, 502, 602, 802) nach einem der Ansprüche 1 bis 7 oder für ein Grundgerät (300, 504, 604, 804) nach einem der Ansprüche 8 bis 11,
- mit einem Kontaktmodul (120, 316, 610, 628, 810, 826) und
- mit einer integrierten Schaltung (400, 608, 626) zur Verarbeitung von Mixed-Signalen oder mit einer Operationsverstärkerschaltung (808, 824),
- wobei das Kontaktmodul (120, 316, 610, 628, 810, 826) ein erstes Kontaktelement (322, 520, 620, 816) und ein zweites Kontaktelement (324, 522, 622, 818) aufweist,
- wobei das Kontaktmodul (120, 316, 610, 628, 810, 826) mit der integrierten Schaltung (400, 608, 626) oder mit der Operationsverstärkerschaltung (808, 824) verbunden ist, und
- wobei die Signalverarbeitungseinheit (112, 306, 605, 625, 807, 823) dazu ausgebildet ist, einerseits ein Signal (700, 900) derart zu verarbeiten und an das Kontaktmodul (120, 316, 610, 628, 810, 826) auszugeben, dass das Signal (700, 900) eine erste Signalkomponente (702, 902) zur Energieversorgung eines elektrisch betriebenen Elements (104, 106, 624, 822) und eine zweite Signalkomponente (704, 708, 904, 908) mit Daten aufweist, und andererseits auf der Grundlage eines durch das Kontaktmodul (120, 316, 610, 628, 810, 826) empfangenen Signals (700, 900) eine Signalkomponente mit Daten auszugeben.
